# EUROPEAN PATENT APPLICATION

(11) **EP 3 682 758 A1**
(43) Date of publication of application: **22.07.2020**
(21) Application number: 17924201.1
(22) Date of filing: 14.11.2017
(51) Int. Cl.: A45C 11/00, H02J 7/02, H02J 7/34

(54) **PROTECTIVE CASING FOR PORTABLE TERMINAL WITH BUILT-IN AUXILIARY BATTERY**

(30) Priority: 11.09.2017 KR 20170115686
(71) Applicant: Adcrunch Co., Ltd., Jeju-si, Jeju-do (KR)
(72) Inventor: Shin, Seung Min, Jeju-si, Jeju-do 63341 (KR)
(74) Representative: Danubia Patent & Law Office LLC
(86) International application number: PCT/KR2017/012878
(87) International publication number: WO 2019/050088

(57) **Abstract**

The present invention relates to a protective casing for a portable terminal with a built-in auxiliary battery, and the protective casing includes a casing body which covers and protects a side surface and a rear surface of a portable terminal, a battery mounting part positioned on a rear surface of the casing body to support installation and separation of the auxiliary battery, a battery power supply part which supplies power charged in the auxiliary battery to the portable terminal when the auxiliary battery is installed in the battery mounting part, a battery wireless charging part which receives wirelessly transmitted power and charges the auxiliary battery, and an additional component mounting part positioned on the rear surface of the casing body to support mounting of the battery wireless charging part.

## Description

### [Technical Field]

The present invention relates to a protective casing for a portable terminal, and more particularly, to a protective casing for a portable terminal with a built-in auxiliary battery which is embedded in the protective casing to provide auxiliary power to the portable terminal and is wirelessly charged.

### [Background Art]

Recently, since mobile phones, which are portable terminals such as smartphones and tablet personal computers (PCs), are used while moving and use batteries serving as power sources unlike wired phones which are used at fixed positions to receive power, the batteries are very important for the mobile phones.

The batteries have a tendency to become thinner as the mobile phones are miniaturized, and in a case in which the battery is consumed through use of the mobile phone, the battery should be recharged. Since moving images are captured and various functions such as multimedia and Internet are additionally performed in addition to an increase in communication traffic amount, battery consumption is increased, and thus importance of charging is increasing.

Particularly, while the number of users of the smartphone referred to as a computer in hand due to various applications being useable is rapidly increasing lately, necessity of the charging increases further.

Accordingly, additional charging devices are provided in houses or offices to use an alternating current (AC) power of AC110/220 V or are provided in vehicles to use cigar jacks of the vehicles for direct current (DC) 12/24 V to charge mobile phones.

However, use of the above described charging method is limited to a place which is not the house or office and to which the AC power is not supplied, and when the vehicle is not traveling, there is cumbersomeness in starting the vehicle up for charging.

Accordingly, although an auxiliary battery is carried in addition to a mobile phone and is replaced when a currently installed battery is completely consumed in the mobile phone so that the mobile phone can be continuously used at any time and place, since such a battery should be carried, it is inconvenient to carry the battery, there is also worry of loss, and a case frequently occurs in which the battery is broken due to carelessness or an external impact while being carried

Therefore, a protective casing for a mobile phone in which an auxiliary battery is accommodated is proposed, but the protective casing has a limit of providing a simple function to accommodate the auxiliary battery.

### [Disclosure]

### [Technical Problem]

The present invention is directed to providing a protective casing for a portable terminal with a built-in auxiliary battery which is embedded in the protective casing and provided as an auxiliary power source for a portable terminal.

In addition, the present invention is also directed to providing a protective casing for a portable terminal with a built-in auxiliary battery in which the auxiliary battery is wirelessly charged to maximize user convenience.

Objectives of the present invention are not limited to the above objectives, and other objectives which are not mentioned above will be clearly understood to those skilled in the art from the following descriptions.

### [Technical Solution]

One aspect of the present invention provides a protective casing for a portable terminal with a built-in auxiliary battery, the protective casing including a casing body which covers and protects a side surface and a rear surface of a portable terminal, a battery mounting part positioned on a rear surface of the casing body to support installation and separation of the auxiliary battery, a battery power supply part which supplies power charged in the auxiliary battery to the portable terminal when the auxiliary battery is installed in the battery mounting part, a battery wireless charging part which receives wirelessly transmitted power and charges the auxiliary battery, and an additional component mounting part positioned on the rear surface of the casing body to support mounting of the battery wireless charging part.

The protective casing for a portable terminal with a built-in auxiliary battery may further include an input part which receives a user control value.

In addition, the protective casing for a portable terminal with a built-in auxiliary battery may further include an output adjusting part which adjusts output power of the auxiliary battery according to the user control value.

In addition, the output adjusting part may determine a charging mode of the portable terminal according to the user control value, may convert the output power of the auxiliary battery to a first value and provide the first value to the portable terminal in a case of a general mode and may convert the output power of the auxiliary battery to a second value greater than the first value and provide the second value to the portable terminal in a case of a rapid mode.

The battery mounting part may include a battery mounting part body provided with an inner space for supporting installation of the auxiliary battery, and a cover which covers the inner space provided in the battery mounting part body to prevent separation of the auxiliary battery.

In addition, the battery mounting part may further include at least one elastic member which is fixed to at least one side wall of the inner space of the battery mounting part body and has a predetermined elastic force, and at least one pressing part which is fixed to one end of the elastic member and presses the auxiliary battery in one direction using the elastic force of the elastic member.

In addition, the protective casing for a portable terminal with a built-in auxiliary battery may further include a battery charging amount check device which is formed to have a sticker shape and of which colored light is changed according to an amount of charge of the auxiliary battery.

### [Advantageous Effects]

In a protective casing for a portable terminal with a built-in auxiliary battery according to the present invention, since the auxiliary battery is embedded in the protective casing and provided as an auxiliary power source for a portable terminal and is wirelessly charged, user convenience is maximized.

In addition, a wider variety of kinds of the auxiliary battery can be installed to maximize utilization of the protective casing.

In addition, in a case in which the portable terminal is charged through the auxiliary battery, since a charging speed can be controlled according to requirements of the user, user satisfaction can be increased further.

### [Description of Drawings]

FIGS. 1 and 2 are views for describing a protective casing for a portable terminal with a built-in auxiliary battery according to one embodiment of the present invention.
FIG. 3 is a view for describing a battery mounting part in detail according to one embodiment of the present invention.
FIG. 4 is a view for describing a battery power supply part in detail according to one embodiment of the present invention.
FIG. 5 is a view for describing a battery power supply part in detail according to another embodiment of the present invention.
FIG. 6 is a view for describing a protective casing for a portable terminal with a built-in auxiliary battery according to another embodiment of the present invention.
FIGS.7 and 8 are views for describing a protective casing for a portable terminal with a built-in auxiliary battery according to still another embodiment of the present invention.

### [Modes of the Invention]

Objectives and effects of the present invention and technical components for achieving the same will be clearly understood with reference to the following embodiments which will be described in detail and the accompanying drawings. When the embodiments of the invention are described, in a case in which it is determined that detailed descriptions of a known technology or components related to the present invention unnecessarily obscure the gist of the invention, the detailed descriptions thereof will be omitted.

In addition, some terms described below are defined by considering functions in the invention and meanings may vary depending on, for example, a user or operator's intentions or customs.

However, the present invention is not limited to the embodiments to be disclosed below and may be implemented in various different forms. The embodiments are provided in order to fully explain the present invention and fully explain the scope of the present invention for those skilled in the art, and the present invention is only defined by the appended claims. Therefore, the definition should be interpreted based on contents throughout this specification.

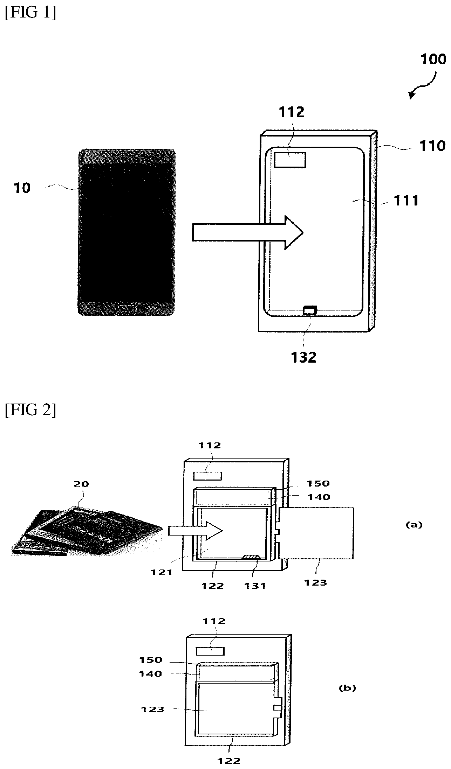

FIGS. 1 and 2 are views for describing a protective casing for a portable terminal with a built-in auxiliary battery according to one embodiment of the present invention.

Referring to FIGS. 1 and 2, a casing 100 according to the present invention includes a casing body 110, a battery mounting part 120, a battery power supply part 130, a battery wireless charging part 140, an additional component mounting part 150, and the like.

The casing body 110 includes an inner space 111 which is formed to correspond to an entire shape of a portable terminal 10 and to cover side and rear surfaces of a smartphone and which accommodates and fixes the portable terminal 10. In addition, as necessary, the casing body 110 may also further include a hole 112 corresponding to positions and sizes of a camera and a flash attached to a rear surface of the portable terminal 10.

The battery mounting part 120 includes a battery mounting part body 122 provided with an inner space 121 positioned on a rear surface of the casing body 110 to support installation and separation of the auxiliary battery 20 and a cover 123 which covers the inner space 121 provided in the battery mounting part body 122 to prevent separation of the auxiliary battery 20 so as to support the installation or separation of the auxiliary battery 20.

In this case, the battery mounting part body 122 and the cover 123 may be coupled through a slot method, a hinge method, or the like. In addition, the cover 123 may cover the inner space of the battery mounting part body 122 through various methods of covering an entirety or part of the inner space of the battery mounting part body 122.

However, in a case in which the auxiliary battery 20 is installed and fixedly positioned in the inner space through an insertion method, since a kind of the auxiliary battery 20 capable of being installed is limited according to a shape of the inner space 121, the battery mounting part 120 according to the present invention may further include a unit for diversifying a kind of an installable auxiliary battery.

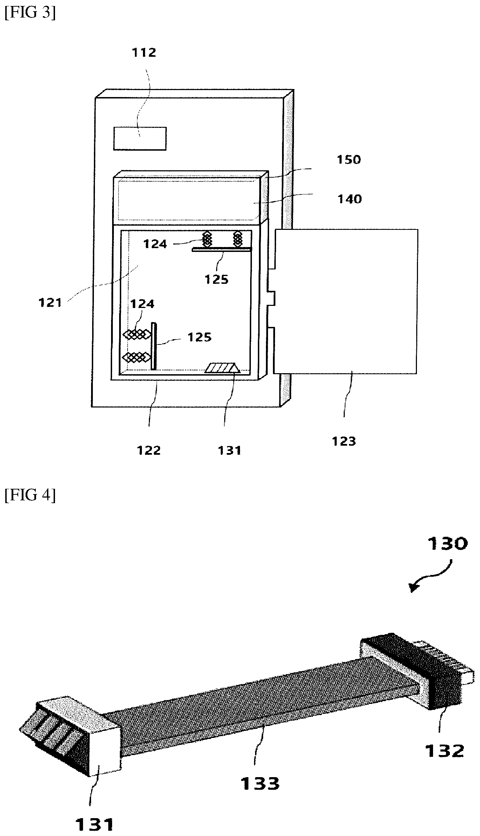

For example, as illustrated in FIG. 3, the battery mounting part 120 according to the present invention may further include one or more elastic members 124 which are fixed to one or more of one side walls of the inner space 121 of the battery mounting part body 122 and have predetermined elastic forces, and one or more pressing parts 125 which are fixed to the other end of the elastic member 124 and press the auxiliary battery 20 in one directions using the elastic forces of the elastic members 124 so as to fix a position of the auxiliary battery 20 at one side of the inner space 121 regardless of a size and a shape of the auxiliary battery 20. That is, a wider variety of kinds of the auxiliary battery 20 may be installed in the protective casing 100.

In this case, positions and the number of the elastic members 124 may be variable but may be adjusted within a range in which electrical contacts are maintained between input and output terminals of the auxiliary battery 20 and a power terminal provided on the battery power supply part 130.

As illustrated in FIG. 4, the battery power supply part 130 includes a power terminal 131 which is in electrical contact with the input and output terminals of the auxiliary battery 20, a connector 132 coupled to a connector terminal of the portable terminal 10, and a signal line 133 which electrically connects the power terminal 131 and the connector 132, and power of the auxiliary battery 20 may be transmitted to the portable terminal 10 through the power terminal 131, the connector 132, and the signal line 133. In this case, it may be more preferable that the signal line 133 is inserted into the casing body 110 so that the signal line 133 is invisible from the outside.

In addition, in a case in which a kind of the auxiliary battery installed in the battery mounting part 120 is diversified, since positions of the input and output terminals of the auxiliary battery are changed according to a kind of the auxiliary battery, a position of the power terminal 131 in electrical contact with the input and output terminals of the auxiliary battery 20 may be variable in the battery power supply part 130 according to the present invention.

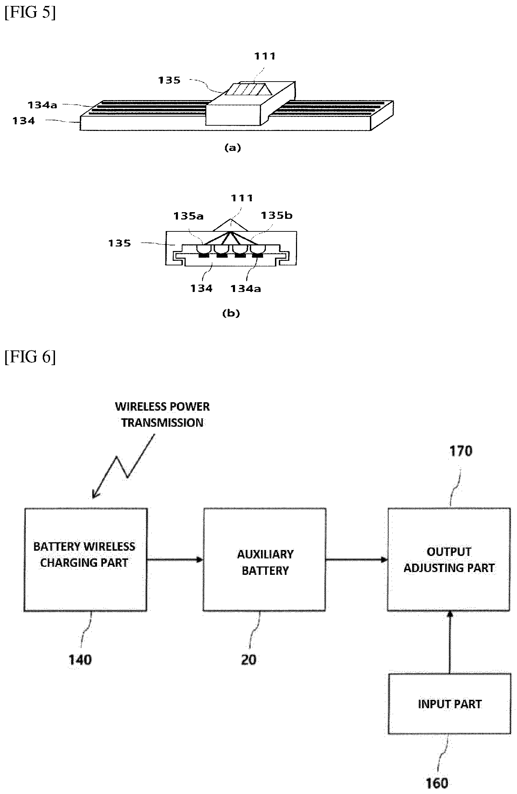

That is, as illustrated in FIG. 5, a battery power supply part 130 according to the present invention may include a rail member 134, in which first electrode strips 134a are formed to extend in a longitudinal direction and electrically connected to a signal line 133, and electrode terminals 135a in electrical contact with the first electrode strips 134a and second electrode strips 135b, which electrically connect a power terminal 131 formed on an upper surface of the battery power supply part 130 and the electrode terminals 135a, and may further include a coupling unit 135 which is coupled to the rail member 134 and of which a position is adjusted on the rail member 134 in the longitudinal direction.

A battery wireless charging part 140 receives wirelessly transmitted power to convert the power to an electronic signal and transmits the electronic signal to input and output terminals of an auxiliary battery. That is, the auxiliary battery may be charged through a wireless power charging method.

An additional component mounting part 150 is positioned on a rear surface of a casing body 110 and supports mounting of the battery wireless charging part 140. The additional component mounting part 150 may include an inner space which supports mounting of the battery wireless charging part 140 and a cap which is additionally provided to seal the inner space, but as necessary, the additional component mounting part 150 may also include an inner space and a cap which are integrated.

In addition, in a casing 100 according to the present invention, a charging speed of the portable terminal may also be arbitrarily adjusted by control of a user as necessary.

That is, as illustrated in FIG. 6, the casing 100 according to the present invention may include a switch, a button, and the like and may further include an input part 160 which receives a user control value through the switch, the button, and the like and an output adjusting part 170 which determines a charging mode of the portable terminal according to the user control value and adjusts an output level of an electronic signal according to the charging mode of the portable terminal so as to arbitrarily adjust the charging speed of the portable terminal.

For example, the output adjusting part 170 according to the present invention has two terminal charging modes including a general mode and a rapid mode, and in a case in which the user selects the general mode through the input part 160, the output adjusting part 170 converts a battery output to a first value (for example, 5 V/1 A) and provides the first value to the portable terminal 10.

However, in a case in which the user selects the rapid mode through the input part 160, the output adjusting part 170 converts an battery output to a second value (for example, 5 V/2.4 A) greater than the first value and provides the second value to the portable terminal 10. In this case, the first value and the second value may be arbitrarily adjusted within a range of a rated input of the portable terminal.

In addition, the output adjusting part 170 may be embedded in the additional component mounting part 150 with the battery wireless charging part 140, and the input part 160 may be positioned on a rear surface of the casing body 110, a cap of a battery mounting part 120, or the like.

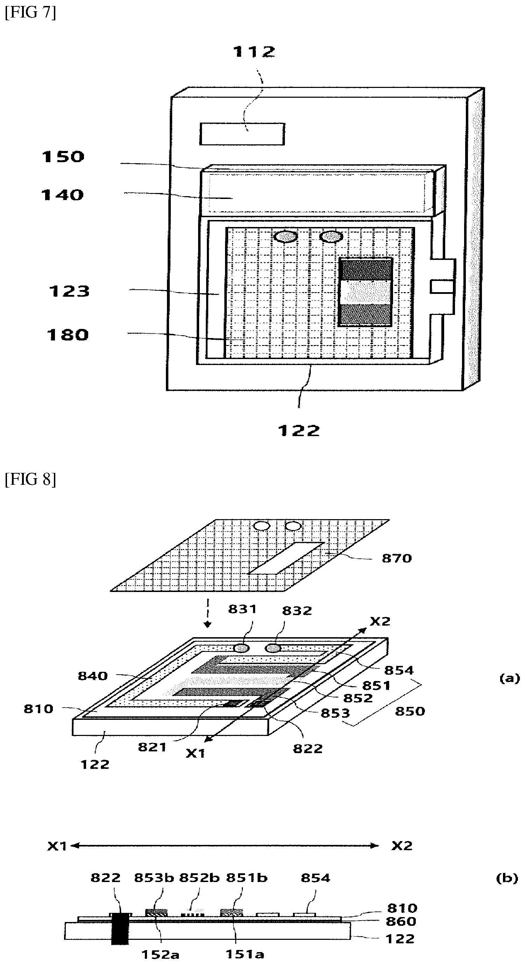

FIGS. 7 and 8 are views for describing a protective casing for a portable terminal with a built-in auxiliary battery according to still another embodiment of the present invention.

As illustrated in FIG. 7, the protective casing for a portable terminal according to the present invention may also further include a battery charging amount check device 180 which is a sticker type and in which colored light is changed according to an amount of charge of an auxiliary battery 20 in addition to the casing body 110, the battery mounting part 120, the battery power supply part 130, the battery wireless charging part 140, and the additional component mounting part 150 which are described above.

Particularly, the sticker type battery charging amount check device 180 according to the present invention may be formed to have a sticker shape to minimize a device forming cost and a volume thereof and may include a thin film 810 having a sticker shape, first and second electrode terminals 821 and 822 which are formed to protrude outward from one side end of a front surface of the thin film 810 and are in contact with input and output terminals of the battery 20, first and second contact pads 831 and 832 which are positioned at the other side end of the front surface of the thin film 810 and come into contact with the body of a user, a metal conductor 840 positioned on the front surface of the thin film 810 to connect the first electrode terminal 821 and the first contact pad 831, a heating and coloring element 850 which is positioned on the front surface of the thin film 810 to connect the second electrode terminal 822 and the second contact pad 832 and of which colored light is changed according to an amount of charge of the battery 20, an adhesive member 860 supporting adhesion between the thin film 810 and the battery 20, and an insulating film 870 attached to the front surface of the thin film 810 to expose the first and second electrode terminals 821 and 822, the first and second contact pads 831 and 832, and some portions of the heating and coloring element.

In addition, as illustrated in FIG. 8, the heating and coloring element 850 may include a plurality of heating conductors 851a, 852a, and 853a which have different resistance values and generate heat corresponding to the resistance values thereof and an output current of the battery, and coloring type temperature-indicating paints 851b, 852b, and 853b which have different coloring values and are applied on the heating conductors. In addition, as necessary, the heating and coloring element 850 may also further include metal conductors 854 which connect the first electrode terminal 821 and the plurality of heating conductors 851a and 852a, and 853a and connect the plurality of heating conductors 851a, 852a, and 853a and the first contact pad 831. That is, when a production cost is considered, the heating conductors 851a, 852a, and 853a of which costs are relatively high may be replaced by the metal conductors 854 of which costs are relatively low to reduce a manufacturing cost.

In addition, in some cases, the heating and coloring element 850 may be formed using one heating conductor in which a heating extent is changed according to an output current of the battery and a coloring type temperature-indicating paint which is applied on the heating conductor and of which colored light is changed according to the heating extent of the heating conductor.

The sticker type battery charging amount check device 180 formed as described above will operate as follows.

When the body of the user simultaneously comes into contact with the first and second contact pads 831 and 832, a current path is formed through the first electrode terminal 821, the metal conductor 840, the first contact pad 831, the body of the user, the second contact pad 832, the heating and coloring element 850, and the second electrode terminal 822.

Then, an output current of the battery 20 flows through the sticker type battery charging amount check device, the first heating conductor 851a generates heat corresponding to a first resistance value (for example, 30 Ω) and a battery output current 1b, the second heating conductor 852a generates heat corresponding to a second resistance value (for example, 20 Ω) and a battery output current Ib, and the third heating conductor 853a generates heat corresponding to a third resistance value (15 Ω) and a battery output current Ib.

Then, the first to third coloring type temperature-indicating paints 851b, 852b, and 853b react to heat generated by the first to third heating conductors 851a, 852a, and 853a and start to perform coloring operations.

However, the coloring operations are performed only when the first to third coloring type temperature-indicating paints 851b, 852b, and 853b generate heat having a predetermined temperature or more. Accordingly, in a case in which a current (for example, 1 A<Ib≤1.5 A) within a first range flows, only the first coloring type temperature-indicating paint 851b applied on the first heating conductor 851a having a largest first resistance value reacts and emits green light. Meanwhile, in a case in which a current (for example, 1.5 A<Ib≤1.7 A) within a second range having a value greater than a value of the first range flows, both of the first and second coloring type temperature-indicating paints 851b and 852b applied on the first and second heating conductors 851a and 852a react and emit green light and orange light. In addition, in a case in which a current (for example, 1.7 A<Ib≤2 A) within a range having a value greater than a value of the second range flows, all of the first to third coloring type temperature-indicating paints 851b, 852b, and 853b applied on the first to third heating conductors 851a, 852a, and 853a react and emit green light, orange light, and red light.

As the result, the user may visually check an output current of the battery 20 through kinds and the number of pieces of color light emitted by the heating and coloring element 850 and may check even an amount of charge of the battery since the output current of the battery 20 is proportionally increased to the amount of charge of the battery.

The above description is only an example describing a technological scope of the present invention. Various changes and modifications may be made by those skilled in the art without departing from the spirit and scope of the present invention. Therefore, the embodiments disclosed above and in the accompanying drawings should be considered in a descriptive sense only and not for limiting the technological scope. The technological scope of the present invention is not limited by the embodiments and the accompanying drawings. The scope of the present invention should be interpreted by the appended claims and encompass all equivalents falling within the scope of the appended claims.

## Claims

1. A protective casing for a portable terminal with a built-in auxiliary battery, the protective casing comprising:
a casing body which covers and protects a side surface and a rear surface of a portable terminal;
a battery mounting part positioned on a rear surface of the casing body to support installation and separation of the auxiliary battery;
a battery power supply part which supplies power charged in the auxiliary battery to the portable terminal when the auxiliary battery is installed in the battery mounting part;
a battery wireless charging part which receives wirelessly transmitted power and charges the auxiliary battery; and
an additional component mounting part positioned on the rear surface of the casing body to support mounting of the battery wireless charging part.

2. The protective casing of claim 1, further comprising an input part which receives a user control value.

3. The protective casing of claim 2, further comprising an output adjusting part which adjusts output power of the auxiliary battery according to the user control value.

4. The protective casing of claim 3, wherein the output adjusting part:
determines a charging mode of the portable terminal according to the user control value;
converts the output power of the auxiliary battery to a first value and provides the first value to the portable terminal in a case of a general mode; and
converts the output power of the auxiliary battery to a second value greater than the first value and provides the second value to the portable terminal in a case of a rapid mode.

5. The protective casing of claim 1, wherein the battery mounting part includes:
a battery mounting part body provided with an inner space for supporting installation of the auxiliary battery; and
a cover which covers the inner space provided in the battery mounting part body to prevent separation of the auxiliary battery.

6. The protective casing of claim 5, wherein the battery mounting part further includes:
at least one elastic member which is fixed to at least one side wall of the inner space of the battery mounting part body and has a predetermined elastic force; and
at least one pressing part which is fixed to one end of the elastic member and presses the auxiliary battery in one direction using the elastic force of the elastic member.

7. The protective casing of claim 1, further comprising a battery charging amount check device which is formed to have a sticker shape and of which colored light is changed according to an amount of charge of the auxiliary battery.
